Europäisches Patentamt

(19) European Patent Office

Office européen des brevets

(11) Numéro de publication: **0 046 426**
**B1**

# (12) FASCICULE DE BREVET EUROPEEN

(45) Date de publication du fascicule du brevet:
**16.05.84**

(51) Int. Cl.³: **A 01 D 85/00**

(21) Numéro de dépôt: **81401261.3**

(22) Date de dépôt: **05.08.81**

(54) **Presse à balles cylindriques.**

(30) Priorité: **20.08.80 FR 8018200**

(43) Date de publication de la demande:
**24.02.82 Bulletin 82/8**

(45) Mention de la délivrance du brevet:
**16.05.84 Bulletin 84/20**

(84) Etats contractants désignés:
**DE FR GB IT NL**

(56) Documents cités:
**US - A - 4 121 513**
**US - A - 4 208 862**

(73) Titulaire: **JOHN DEERE (Société Anonyme), 8, Quai de la Madeleine, F-45000 Orléans (FR)**

(72) Inventeur: **Viaud, Jean, Chargey-les-Gray, F-70100 Gray (FR)**

(74) Mandataire: **Pruvost, Marc Henri et al, Cabinet ORES 6, Avenue de Messine, F-75008 Paris (FR)**

BUNDESDRUCKEREI BERLIN

EP 0 046 426 B1

## Presse à balles cylindriques

La présente invention concerne les presses à balles cylindriques.

Ces presses sont d'un type général bien connu et comprennent des jeux de bandes ou courroies qui, par leur déplacement, forment par enroulement à l'intérieur d'une chambre ménagée dans le corps de la presse une balle de forme générale cylindrique à partir de produits de récolte, notamment de fourrage ou de foin, ramassés sur le champ au cours de la progression de la presse. Quand la balle a atteint le diamètre désiré et a été liée, la porte arrière de la presse, qui s'est arrêtée, est ouverte et la balle est déchargée sur le sol. La formation d'une autre balle par enroulement peut être déclenchée ensuite à l'intérieur de la presse. Des rouleaux de renvoi des courroies de la presse sont portés par des bras de tension montés de façon pivotante ou des organes équivalents, de manière à modifier le trajet des courroies pendant l'enroulement des produits correspondant à la formation de la balle, en compensant ainsi la variation de diamètre de celle-ci (US-A-4 121 513).

Dans les presses à balles cylindriques de ce type existant actuellement, la balle est déposée sur le sol en arrière de la chambre de formation lors de l'ouverture de la porte arrière, des moyens étant éventuellement prévus pour favoriser ce déchargement de la balle. Etant donné que la porte arrière des presses de ce type est généralement articulée autour d'un axe horizontal transversal situé vers sa partie supérieure, on comprend qu'il est nécessaire de faire avancer la presse avant de pouvoir rabattre cette porte arrière. Or ce mouvement d'avance ne peut pas correspondre à une reprise des produits de récolte sur le sol, puisque la chambre de la presse est alors ouverte. En conséquence, il est nécessaire de faire reculer la machine pour le déchargement de la balle puis, la porte étant ouverte, de la ramener au début de l'andain. Ainsi, il est possible de refermer la porte sans heurter la balle et de reprendre les produits de récolte dès le début de l'andain. Dans le cas contraire, il en résulterait une perte de produits de récolte demeurant sur le sol à chaque éjection d'une balle complètement formée.

Le but de l'invention est de remédier à cet inconvénient et d'éviter ce mouvement vers l'arrière, puis vers l'avant de la machine pour la ramener dans une position de début de travail à chaque opération de formation d'une balle cylindrique.

On a déjà proposé, pour remédir à cet inconvénient (Brevets USA-4 208 862 et FR-A-2 457 635), de prévoir sur la presse des moyens d'entraînement assurant un déchargement automatique de la balle terminée au moment de l'ouverture de la porte, ces moyens d'entraînement étant, lors de ce déchargement, en contact avec la balle, pour lui imprimer une poussée ou impulsion d'éjection suffisamment puissante pour que la balle ainsi éjectée, quittant la chambre de la presse, roule sur le sol à l'écart de la trajectoire de la porte arrière de la presse lors de sa fermeture. Les moyens d'entraînement susdits sont constitués par l'unique jeu de courroies servant à délimiter la chambre de formation de la balle et dont le mouvement est inversé le de l'ouverture de la porte arrière.

Mais compte tenu en particulier du poids relativement élevé des balles rondes ou cylindriques formées dans les presses de ce type, qui peuvent atteindre 400 à 700 kg, la force d'impulsion requise est relativement importante. En outre, la balle ainsi éjectée sur le sol subit, ici encore compte tenu de son poids élevé, un impact qui peut provoquer sa désagrégation au moins partielle si son liage n'est pas parfait.

Le but de l'invention est également de remédier à cet inconvénient du système ainsi proposé, en évitant l'empoi de moyens nécessairement assez puissants et l'impact de la balle sur le sol lors de son éjection.

On parvient à ce résultat, suivant l'invention, par le fait que le jeu de courroies arrière de la presse est maintenu en contact au moins partiel avec la balle quand celle-ci a été déchargée de la presse par la porte arrière et repose sur le sol, des moyens constitués par exemple par un inverseur des moyens d'entraînement normal des courroies ou par un moteur indépendant assurant le déplacement du brin de ces courroies en contact avec la balle en direction de l'arrière, dans un sens tendant à faire rouler la balle cylindrique sur le sol également en direction de l'arrière, à l'écart de la presse.

En conséquence, après le déchargement de la balle sur le sol, les courroies agissent pour faire rouler cette balle sur le sol afin de l'écarter de la presse, de sorte que le rabattement de la porte arrière de celle-ci n'est plus gêné par la balle; cette porte arrière peut ainsi être rabattue sans devoir faire avancer la presse, pour refermer la chambre de formation de la balle, et il devient inutile de faire reculer la machine pour la reprise du début de l'andain puisque la presse est demeurée immobile entre le déchargement de la balle terminée et le début de l'operation suivante de formation d'une autre balle.

Par ailleurs, ce résultat est obtenu sans devoir prévoir des moyens capables de fournir une force d'éjection ou une impulsion de la lourde balle formée pour la projeter et la faire rouler suffisamment loin en arrière de la presse, et d'une manière ménageant la balle et évitant sa désagrégation, même si son liage n'est pas parfait, étant donné que le déchargement de la balle a lieu de la manière usuelle, juste derrière le corps de la presse, par la porte arrière ouverte de celle-ci.

D'une façon en soi classique, le brin des courroies délimitant la partie arrière de la chambre de formation de la balle passe sur des rouleaux de guidage et de tension, dont l'un au moins est déplaçable au fur et à mesure de l'augmentation de diamètre de la balle pour tenir compte de cette variation de dimension.

Suivant une réalisation possible, au moins le rouleau de guidage est monté sur des bras de support ou des éléments équivalents, et des moyens sont prévus pour déplacer ces bras de support lors du basculement de la porte arrière de la presse pour le déchargement de la balle, afin de maintenir les dourroies en contact avec cette balle pour la faire rouler sur le sol.

On comprend aisément que, lorsque la balle a été déposée sur le sol, le brin des courroies en contact avec sa partie supérieure doit nécessairement se mouvoir en direction de l'arrière. Or, dans les presses existantes, l'enroulement de la balle s'effectue dans un sens qui correspond à un déplacement de bas en haut du brin des courroies de la partie arrière de la presse quand la porte est fermée, c'est-à-dire dans un sens est opposé à celui requis.

Suivant l'invention, des moyens sont donc prévus pour inverser ce sens de déplacement des courroies de la partie arrière de la chambre de formation de la balle au moment de l'ouverture de la porte arrière de la presse. Si désiré, l'entraînement normal de ces courroies peut être débrayé, et un inverseur peut être enclenché pour assurer l'entraînement dans le sens requis. Suivant une variante, l'entraînement normal peut être débrayé et un dispositif d'entraînement séparé, tel qu'un moteur hydraulique ou autre, peut être mis en service pour fournir le déplacement dans le sens requis.

La description qui va suivre, faite en regard des dessins annexés, donnés à titre non limitatif, permettra de mieux comprendre l'invention. La

fig. 1 est une représentation schématique de profil d'une presse à balles cylindriques suivant l'invention. La

fig. 2 est une vue analogue à la fig. 1, mais après ouverture de la porte arrière de la presse, afin d'indiquer le mode d'éjection de la balle vers l'arrière.

Sur les dessins, on a désigné par la référence 1 une presse à balles cylindriques de type général classique, comportant un châssis avant fixe indiqué schématiquement en 2, supporté par des roues 3 et portant un timon 4 destiné à son attelage à un tracteur par exemple. Sur la partie avant fixe 2 formant châssis est articulée une porte arrière indiquée de façon générale en 5, qui peut pivoter sur la partie avant autour d'un axe transversal horizontal supérieur non représenté, l'ouverture et la fermeture de cette porte étant commandées de façon en soi classique par des vérins hydrauliques ou des moyens équivalents (également non représentés).

Un jeu de courroies avant 6 est prévu sur la partie avant fixe 2 formant châssis. Ces courroies 6 comprennent de la façon usuelle un certain nombre de courroies parallèles réparties sur la largeur de la presse et passant sur des rouleaux de renvoi 7, 8 et 9. Les rouleaux 7 et 8 sont montés à post fixe. Le rouleau 7 est entraîné par une transmission par courroie ou chaîne 10 à partir d'une boîte de renvoi 11 attaquée elle-même par l'arbre de transmission 12 relié à l'arbre de prise de force du tracteur. Une autre transmission par courroie ou chaîne 13 transmet le mouvement au rouleau supérieur 8.

Le rouleau 9 est monté sur des bras de tension 14 montés à pivotement en 15 sur la partie avant 2 de la presse. Ces bras sont commandés par des moyens classiques (non représentés) afin de maintenir les courroies 6 en tension pendant toute l'opération de formation de la balle malgré la variation du diamètre de celle-ci.

La presse comporte également un jeu de dourroies arrière 16 passant, dans l'exemple représenté sur des rouleaux fixes 17 et 18 et sur des rouleaux mobiles 19 et 20. Le rouleau 19 est monté sur des bras de tension 21 pouvant pivoter sur la porte arrière 5 de la presse. Dans ce cas encore, des moyens sont prévus de façon en soi classique, pour commander le mouvement de ces bras 21 afin de maintenir les courroies 16 en tension au cours de la formation de la balle. Des moyens peuvent comporter comme pour la commande des bras de tension 14, des vérins hydrauliques et des ressorts par exemple.

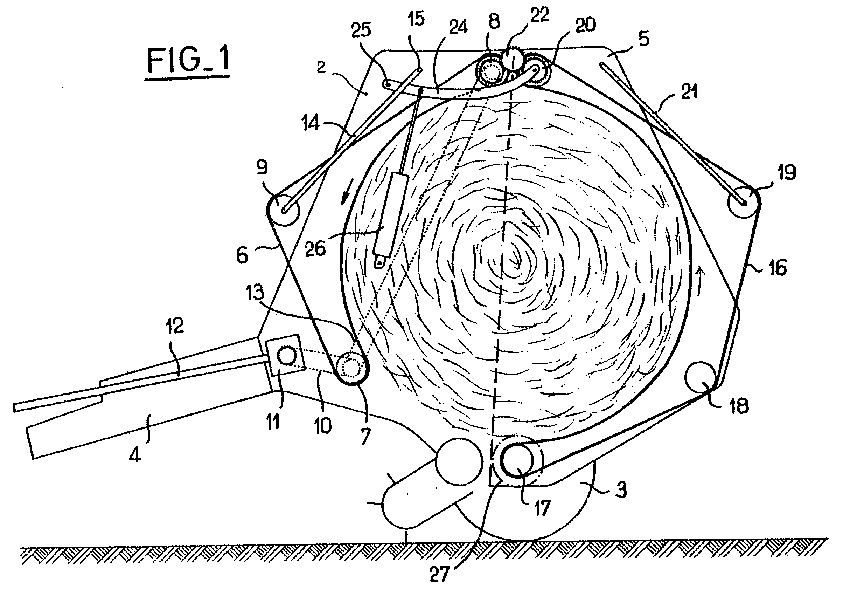

Le rouleau supérieur 20 est entraîné de façon positive en rotation. Il est prévu à cet effet, sur l'arbre du rouleau supérieur de la partie avant de la presse, un pignon qui est en prise avec un pignon de renvoi 22, lequel est en prise à son tour avec un pignon prévu sur l'arbre du rouleau supérieur 20. Dans la condition fermée de la presse, les courroies 6 et 16 tournent ainsi dans le sens indiqué par des flèches sur la fig. 1.

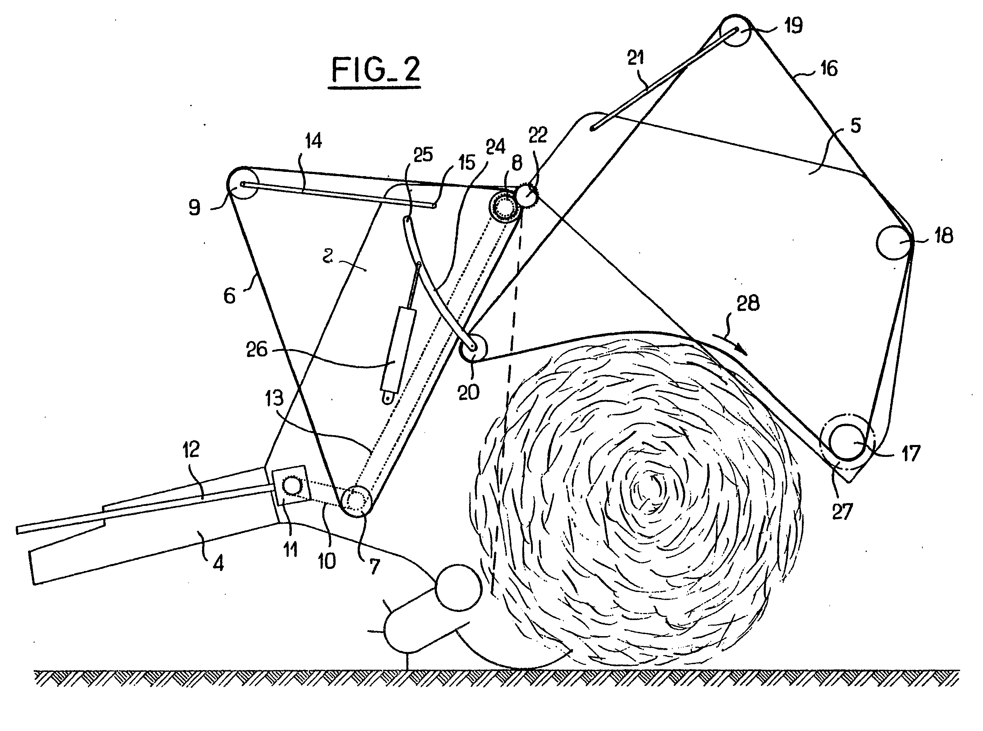

Le rouleau supérieur 20 est monté à rotation à l'extrémité de bras 24 qui peuvent pivoter en 25 sur la partie avant 2 de la machine et qui sont soumis à l'action d'un vérin hydraulique 26. Ce vérin hydraulique 26 est relié d'une manière non représentée au mécanisme d'ouverture de la porte arrière 5 de la presse, de telle sorte qu'il provoque le pivotement dans le sens horaire des bras 24 lors du relevage de cette porte arrière 5, de la manière visible sur la fig. 2.

La comparaison entre les fig. 1 et 2 montre que, lors de l'ouverture de la porte arrière 5 de la presse et du déchargement de la balle, le pivotement des bras 24 maintient les courroies 16 en contact avec la balle parvenue sur le sol, par leur brin qui délimitait la partie arrière de la chambre de formation de la balle.

Suivant le mode de réalisation considéré, il est prévu sur la porte arrière 5 de la presse un moteur hydraulique 27 qui est conjugué au rouleau fixe 17.

On voit sur la fig. 2 que, lors de l'ouverture de la porte arrière 5 de la presse et du pivotement des bras 24, le rouleau 20 et avec lui le pignon qu'il porte s'écartent du pignon de renvoi 23, de sorte que les courroies 16 ne sont plus entraînées. Des moyens sont prévus pour assurer, lors de cette ouverture de la porte arrière 5 de la presse, l'alimentation du moteur hydraulique 27, pour assurer sa rotation dans un sens déplaçant *les courroies 16 à l'opposé de leur sens de déplacement* pour la formation de la balle, comme indiqué par la flèche 28 sur la fig. 2. On voit en conséquence sur cette figure que ce déplacement des courroies 16 dans le sens indiqué en contact avec la partie supérieure de la balle reposant sur le sol va faire rouler cette balle et provoquer son mouvement vers l'aarière 5 de la presse. Le conducteur pourra, en conséquence, refermer librement cette porte arrière 5 sans être gêné par la balle et sans devoir faire avancer la machine, c'est-à-dire qu'une fois la porte arrière 5 fermée, l'opération de ramassage des produits de récolte en vue de la formation d'une nouvelle balle pourra commencer immédiatement, sans que le conducteur doive d'abord faire reculer la presse pour reprendre l'andain à son extrémité.

Du fait que l'action de déplacement vers l'arrière exercée sur la balle intervient quand cette balle repose sur le sol, ce résultat est en outre obtenu sans éjection de la balle hors de la presse dans des conditions provoquant sa projection vers l'arrière, avec les exigences de puissance et les risques de désagrégation de la balle qui en découlent.

## Revendications

1. Presse à balles cylindriques (1) du type comportant, en sus des moyens d'amenée du produit, des jeux de bandes ou courroies (6, 16) formant, par enroulement à l'intérieur d'une chambre ménagée par ces courroies dans le corps de la presse, une balle de forme générale cylindrique à partir de produits de récolte ramassés sur le champ au cours de la progression de la presse, et constituant un jeu de courroies avant (6) porté par une partie avant fixe (2) de la presse et un jeu de courroies arrière (16) supporté par une porte arrière mobile (5), ainsi que des moyens assurant l'entraînement des courroies pour la formation de la balle, caractérisée en ce qu'elle comporte des moyens (24, 26) maintenant ce jeu de courroies arrière en contact au moins partiel avec la balle quand celle-ci a été déchargée de la presse par la porte arrière (5) en position normale d'ouverture et repose sur le sol, ainsi que des moyens (27), constitués par exemple par un inverseur des moyens d'entraînement normal des courroies ou par un moteur indépendant, qui assurent le déplacement du brin de ces courroies en contact avec la balle en direction de l'arrière, dans un sens tendant à faire rouler la balle cylindrique sur le sol également en direction de l'arrière, à l'écart de la presse.

2. Presse à balles cylindriques suivant la revendication 1, dans laquelle les courroies (16) délimitant la partie arrière de la chambre de formation de la balle passent sur un rouleau supérieur (20) et sur un rouleau inférieur (17), ainsi que sur des rouleaux de tension (18, 19), caractérisée en ce qu'au moins le rouleau supérieur (20) est monté sur des bras de support (24) ou des éléments équivalents, et en ce que des moyens (26) sont prévus pour déplacer ces bras de support (24) lors du basculement de la porte arrière (5) de la presse pour le déchargement de la balle, afin de maintenir les courroies (16) en contact avec cette balle pour la faire rouler sur le sol, les bras de support (24) ou équivalents et les moyens {26) constituant les moyens maintenant le jeu de courroies arrière en contact avec la balle.

3. Presse à balles cylindriques suivant la revendication 2, caractérisée en ce que les moyens (26) de déplacement des bras de support (24) sont constitués par un vérin hydraulique (26) ou orange analogue combiné aux bras de support (24) ou aux éléments équivalents supportant le rouleau supérieur (20), pour déplacer ces bras de support et ainsi ce rouleau supérieur (20) simultanément à l'ouverture de la porte arrière (5) de la presse.

4. Presse à balles cylindriques suivant l'une quelconque des revendications 1 à 3, du type dans lequel le brin des courroies arrière (16) délimitant la partie arrière de la chambre de formation de la balle se déplace de bas en haut lors de cette formation, caractérisée en ce que les moyens (27) sont prévus pour inverser le sens de déplacement de ces courroies (16) de la partie arrière de la chambre de formation de la balle au moment de l'ouverture de la porte arrière (5) de la presse.

5. Presse à balles cylindriques suivant la revendication 4, caractérisée en ce que des moyens sont prévus pour débrayer les organes d'entraînement normal de ces courroies (16) et pour intercaler dans la transmission un inverseur assurant l'entraînement desdites courroies dans le sens requis après l'ouverture de la porte arrière (5) de la presse.

6. Presse à balles cylindriques suivant la revendication 4, caractérisée en ce que des moyens sont prévus pour débrayer les organes d'entraînement normal des courroies, et en ce qu'il est prévu un dispositif d'entraînement séparé, tel qu'un moteur hydraulique (27), ainsi que des moyens pour assurer la mise en service de ce dispositif dans le sens requis lors de l'ouverture de la porte arrière (5) de la presse.

## Patentansprüche

1. Presse für zylindrische Ballen (1) des Typs, der außer der Mittel zum Zuführen des Produktes, Sätze von Bändern oder Riemen (6, 16) umfaßt, die durch Aufrollen im Inneren einer im Körper der Presse durch die Riemen gebildeten Kammer einen Ballen von allgemein zylindrischer Form aus den bei der Fahrt der Presse über das Feld aufgesammelten Ernteprodukten bilden und einen vorderen Riemensatz (6), der von einem vorderen fixierten Bereich (2) der Presse getragen wird, und einen rückwärtigen Riemensatz (16) darbieten, der durch ein rückwärtiges bewegliches Tor (5) getragen wird und der Mittel aufweist, welche die Mitnahme der Riemen zur Bildung des Ballens sicherstellen, dadurch gekennzeichnet, daß sie Mittel (24, 26) umfaßt, welche den Satz von hinteren Riemen wenigstens in teilweisen Kontakt mit dem Ballen halten, wenn dieser durch das in der normalen Offenstellung befindliche rückwärtige Tor (5) entladen und auf den Erdboden abgelegt wird, sowie Mittel (27), die z. B. durch eine Umkehreinrichtung der normalen Antriebsmittel für die Riemen oder durch einen unabhängigen Motor gebildet sind, welche die Verstellung des Trums der Riemen, das sich mit dem Ballen in Kontakt befindet, in Richtung nach hinten sicherstellen in einem Sinne, der den zylindrischen Ballen auf dem Erdboden ebenfalls in Richtung nach hinten von der Presse wegrollen läßt.

2. Presse für zylindrische Ballen nach Anspruch 1, bei der die Riemen (16), welche den rückwärtigen Teil der Ballenbildungskammer begrenzen, über eine obere Rolle (20) und über eine untere Rolle (17) sowie über Spannrollen (18, 19) laufen, dadurch gekennzeichnet, daß wenigstens die obere Rolle (20) auf Tragarmen (24) oder äquivalenten Elementen montiert ist und daß Mittel (26) vorgesehen sind, um die Tragarme (24) mit dem Verschwenken des rückwärtigen Tores (5) der Presse für das Entladen des Ballens zu verstellen, um die Riemen (16) mit diesem Ballen in Kontakt zu halten und diesen auf dem Erdboden rollen zu lassen, wobei die Tragarme (24) oder deren Äquivalente und die Mittel (26) bilden, welche den rückwärtigen Satz von Riemen mit dem Ballen in Kontakt halten.

3. Presse für zylindrische Ballen nach Anspruch 2, dadurch gekennzeichnet, daß die Mittel (26) zur Verstellung der Tragarme (24) durch einen hydraulischen Zylinder (26) oder ein analoges Organ gebildet werden, der mit den Tragarmen (24) oder den äquivalenten Elementen, welche die obere Rolle (20) tragen, kombiniert ist, um die Tragarme und so die obere Rolle (20) gleichzeitig mit dem Öffnen des rückwärtigen Tores (5) der Presse zu verstellen.

4. Presse für zylindrische Ballen nach irgendeinem der Ansprüche 1 bis 3 des Typs, bei dem das Trum der rückwärtigen Riemen (16), welches den rückwärtigen Teil der Bildungskammer für den Ballen begrenzt, sich während dessen Bildung von unten nach oben verstellt, dadurch gekennzeichnet, daß Mittel (27) vorgesehen sind, um den Sinn der Verstellung dieser Riemen (16) des rückwärtigen Teils der Ballenbildungskammer umzukehren im Augenblick des Öffnens des rückwärtigen Tores (5) der Presse.

5. Presse für zylindrische Ballen nach Anspruch 4, dadurch gekennzeichnet, daß Mittel vorgesehen sind, um die normalen Antriebsorgane dieser Riemen (16) auszukuppeln und eine Umkehreinrichtung in die Transmission einzurücken, welche einen Antrieb dieser Riemen in dem erforderlichen Sinne nach dem Öffnen des rückwärtigen Tores (5) der Presse sicherstellt.

6. Presse für zylindrische Ballen nach Anspruch 4, dadurch gekennzeichnet, daß Mittel vorgesehen sind, um die normalen Antriebsorgane der Riemen auszukuppeln, und daß eine getrennte Antriebseinrichtung vorgesehen ist, z. B. ein hydraulischer Motor (27), sowie Mittel, welche die Inbetriebnahme dieser Einrichtung in dem erforderlichen Sinne sicherstellen, wenn das rückwärtige Tor (5) der Presse geöffnet wird.

**Claims**

1. A cylindrical bale press (1) of the type comprising, in addition to the means for feeding the product, sets of bands or belts (6, 16) which, by winding within a chamber formed by said belts in the body of the press, form a bale of general cylindrical shape from crop products which are picked up in the field in the course of the movement of the press, and forming a front set of belts (6) which is carried by a front fixed portion (2) of the press and a rear set of belts (16) which is supported by a movable rear door (5), and means for driving the belts for forming the bale, characterized in that it comprises means (24, 26) for holding said rear set of belts in at least partial contact with the bale when the bale has been discharged from the press through the rear door (5) in the normal open position, and rests on the ground, and means (27) formed for example by a device for reversing the means for normal drive for the belts or by an independent motor, to provide for displacement of the run of said belts which is in contact with the bale, towards the rear, in a direction tending to cause the cylindrical bale to roll on the ground also towards the rear, away from the press.

2. A cylindrical bale press according to claim 1, wherein the belts (16) defining the rearward portion of the bale-forming chamber pass around an upper roller (20) and a lower roller (17) as well as tensioning rollers (18, 19), characterized in that least the upper roller (20) is mounted on support arms (24) or equivalent elements, and that means (26) are provided for displacing said support arms (24) upon pivotal movement of the rear door (5) of the press for discharging the bale, in order to hold the belts (16) in contact with said bale to cause it to roll on the ground, the support arms (24) or equivalent and the means (26) forming the means for holding the rear set of belts in contact with the bale.

3. A cylindrical bale press according to claim 2, characterized in that the means (26) for displacing the support arms (24) comprise a hydraulic jack (26) or like member which is combined with the support arms (24) or the equivalent elements supporting the upper roller (20), to displace said support arms and thus said upper roller (20) at the same time as the rear door (5) of the press is opened.

4. A cylindrical bale press according to any one of claims 1 to 3 of the type in which the run of the rearward belts (16) defining the rearward portion of the bale-forming chamber is displaced in an upward direction during a bale forming operation, characterized in that the means (27) are provided for reversing the direction of displacement of said belts (16) of the rearward portion of the bale-forming chamber, at the moment of opening of the rear door (5) of the press.

5. A cylindrical bale press according to claim 4, characterized in that means are provided for disengaging the members for normally driving said belts (16) and for interposing in the transmission a reversing device for driving said belts in the required direction after opening of the rear door (5) of the press.

6. A cylindrical bale press according to claim 4, characterized in that means are provided for disengaging the members for normally driving the belts, and that there is provided a separate drive device such as a hydraulic motor (27) and means for rendering said device operative in the required direction upon opening of the rear door (5) of the press.

FIG_1

FIG_2